# EUROPÄISCHE PATENTSCHRIFT

(11) **EP 4 427 838 B1**
(45) Veröffentlichungstag und Bekanntmachung des Hinweises auf die Patenterteilung: **05.03.2025**
(21) Anmeldenummer: 23160474.5
(22) Anmeldetag: 07.03.2023
(51) Int. Cl.: B01J 3/04, B01J 3/03, B01J 3/02

(54) **BEHÄLTER UND VERFAHREN ZUR BEHANDLUNG EINES WERKSTÜCKS**
CONTAINER AND METHOD FOR TREATING A WORKPIECE
RÉCIPIENT ET PROCÉDÉ DE TRAITEMENT D'UNE PIÈCE

(43) Veröffentlichungstag der Anmeldung: 11.09.2024
(73) Patentinhaber: Altech Batteries GmbH, 02979 Spreetal (DE)
(72) Erfinder: Fritz, Horst, 76596 Forbach (DE)
(74) Vertreter: Bendele, Tanja

(56) Entgegenhaltungen:
- EP-B1- 1 693 130
- WO-A1-2020/234075
- DE-B- 1 035 105
- US-A- 3 056 664
- US-A1- 2011 226 608

## Beschreibung

Die vorliegende Erfindung betrifft einen Behälter zur Behandlung eines Werkstücks, umfassend ein Gehäuse, in welchem ein Gehäusemantel, ein Gehäuseboden und ein Gehäusedeckel eine Arbeitskammer umschließen, wobei das Gehäuse über eine Zugangsöffnung im Gehäusedeckel zugänglich und doppelwandig ausgeführt ist und in einem innenliegenden Zwischenraum der Doppelwandung eine evakuierte Isolierkammer ausbildet, sowie ein Verfahren zur Behandlung eines Werkstücks unter Verwendung eines solchen Behälters.

Derartige Behälter sind bereits allgemein vorbekannt. Aus der EP 1 693 130 B1 ist etwa ein Behälter bekannt, der mehrere voneinander getrennt angelegte Raumbereiche umschließt, in denen eine hermetisch verschlossene Kammer zu Bereitstellung von gasförmigen Reaktions- oder Kühlmitteln, eine nach oben hin offene Arbeitskammer und eine integrierte Heizkammer angelegt sind. Diese Lösung dient dazu, innerhalb der Arbeitskammer in einer hierfür vorgehaltenen Reaktionsflüssigkeit Reaktionen unter vorgegebenen Bedingungen ablaufen zu lassen. Insbesondere ist hierbei vorgesehen, eine Beheizung von unterhalb der Arbeitskammer durchzuführen, wo Heizelemente elektrisch betrieben werden können. Das Einbringen von gasförmigen Kühlmitteln erfolgt in umgekehrter Richtung über eine Zuführung im Deckel.

Diese Lösung weist zwar eine wärmeisolierte Arbeitskammer auf, nutzt deren Möglichkeiten jedoch nicht effizient, da die Heizmittel direkt mit dem Behälter verbunden sind. Es handelt sich um ein Reaktionsgefäß in einem kleinen Maßstab, in dem einzelne Proben oder Werkstücke bearbeitet werden können. Für die Herstellung größerer Mengen sieht diese Schrift jedoch keine Lösung vor.

Weiter ist ein Reaktionsbehälter aus der WO 2020/194028 A1 bekannt. Hierbei handelt es sich um einen von außerhalb induktiv beheizbaren Behälter, wobei allerdings der Behälter als solcher einwandig ausgebildet ist und keinerlei Isolation aufweist. Eine Erhitzung findet über eine Umhüllung des Bechers aus einem induktiv erregbaren Material statt. Auch diese Lösung lässt sich nicht auf eine größere Skalierung übertragen, zumal die einmal in den Behälter eingebrachte Wärme sogleich verlorengeht.

Ein eine Isolation aufweisender Reaktionsbehälter ist aus der DE 1 035 105 B vorbekannt. Diese offenbart einen elektrisch beheizbaren Ofen mit einer annähernd zylindrischen Wandung und einer Isolierschicht, wobei im dem sich zwischen der Wandung des Behandlungsraums und der Isolierungsschicht ausbildende Raum Heiz- sowie gegebenenfalls Kühlkörper angeordnet sind.

Ferner offenbart die WO 2020/234075 A1 ein drehbares Reaktionsgefäß zur Durchführung einer endothermen Reaktion mit einem Behälter, welcher eine doppelwandige Außenwand aufweist, wobei der Innenraum dieser doppelwandigen Außenwand evakuiert ist, und sich an der Innenseite der Außenwand eine elektrisches Heizsystem befindet.

In Zeiten steigender Material- und Energiekosten wird nach Wegen gesucht, um industrielle Prozesse kostengünstiger und effizienter ablaufen lassen zu können. Dies betrifft nicht nur einzelne Branchen, wirkt sich aber in den Branchen aufgrund des unterschiedlichen Energiebedarfs ganz unterschiedlich aus. Betrachtet man beispielsweise den komplexen Prozess der Batterieherstellung, so durchläuft eine Batterie verschiedene Umgebungsbereiche, in denen unterschiedliche Bedingungen herrschen müssen. Zum Einen werden während der Herstellung einer Batterie unterschiedliche Temperaturniveaus benötigt, die üblicherweise in einem Durchlaufprozess in Wärmetunneln angesteuert werden, durch welche das Werkstück hindurchgeschleust wird. Die Umgebungstemperaturen für den Durchlauf auf einem Niveau zu halten ist sehr energieintensiv. Gleiches gilt für die Vorgabe von Atmosphärendruck und Luftzusammensetzung. Da gerade Lithium sehr heftig mit Wasser reagiert, muss während der Herstellung von Lithium-Ionen-Batterien und -akkumulatoren darauf geachtet werden, dass die Luftfeuchtigkeit niedrig bleibt, so dass der Elektrolyt wasserfrei bleiben kann. Diese Umgebungstemperaturen sind jedoch für das eingesetzte Personal eher unwirtlich und führen mit der Zeit zu gesundheitlichen Problemen.

Vor diesem Hintergrund liegt der vorliegenden Erfindung die Aufgabe zu Grunde, eine Möglichkeit zu schaffen, bekannte Durchlaufprozesse von dem Wärmetunnel auf eine produktindividuelle Fertigung zu verlagern und damit den Energieeinsatz zu minimieren, die Umgebungsparameter besser anpassen zu können und die Umgebung für das Personal weniger gesundheitsschädlich zu gestalten.

Dies gelingt durch einen Behälter zur Behandlung eines Werkstücks gemäß den Merkmalen des unabhängigen Anspruchs 1, sowie durch ein Verfahren zur Behandlung eines solchen Werkstücks gemäß den Merkmalen des nebengeordneten Anspruchs 19. Sinnvolle Ausgestaltungen eines solchen Behälters sowie des Verfahrens können den sich jeweils anschließenden abhängigen Ansprüchen entnommen werden.

Vorgesehen ist hierfür ein Behälter zur Behandlung eines Werkstücks, umfassend ein Gehäuse, in welchem ein Gehäusemantel, ein Gehäuseboden und ein Gehäusedeckel eine Arbeitskammer umschließen, wobei das Gehäuse über eine Zugangsöffnung im Gehäusedeckel zugänglich und doppelwandig ausgeführt ist und in einem innenliegenden Zwischenraum der Doppelwandung eine evakuierte Isolierkammer ausbildet. Ein solcher Behälter ist erfindungsgemäß dadurch gekennzeichnet, dass die Zugangsöffnung einen Verschluss zur hermetischen Abdichtung der Arbeitskammer aufweist und die Arbeitskammer von einem Heizelement umgeben ist, welches sich zumindest abschnittsweise entlang des Gehäusemantels erstreckt.

Ein solcher Behälter ermöglicht eine effiziente Wärmespeicherung aufgrund der doppelwandigen Isolierung und weist einen Verschluss auf, mit welchem die Arbeitskammer hermetisch abgedichtet werden kann. Bedarfsweise kann hierfür ein elastisch verformbares Dichtelement zwischen der Zugangsöffnung und dem Verschluss vorgesehen sein, um den Verschluss gasdicht zu gestalten. Im Ergebnis kann über eine extern angelegte Induktionsspule, die dem Behälter nicht selbst fest zugeordnet ist, eine Wärmeeinkopplung bewerkstelligen, die auch nach Abschaltung der Induktionsspule zunächst aufgrund der Isolierung weiter erhalten bleibt.

Einem derart gestalteten Behälter können die unterschiedlichsten Prozessparameter zugeordnet werden, ohne dass seine Umgebung in großem Maße hiervon betroffen ist. Auch können unterschiedliche Prozesse für ähnliche Werkstücke in parallelen Prozessen unmittelbar nebeneinander betrieben werden. Eine Rückgewinnung von Wärme kann erreicht werden, indem mit dem Behälter zu verbindenden Zuführeinrichtungen ein Wärmetauscher zugeordnet wird, so dass die frei werdende Wärme wieder in das System zurückgeholt werden kann. Insbesondere kann vorgesehen sein, dass eine Prozesssteuerung eingesetzt wird, welche mehrere oder sogar zahlreiche Behälter parallel zueinander betreibt und den verschiedenen Betriebsmitteln, wie etwa Induktionsspulen zur Beheizung, einer Begasung mit Schutzgas, der Befüllung über eine Zuführeinrichtung, die Zuführung von Kühlgas, Temperaturmessungen mithilfe von Temperatursensoren durch Einführen von Sonden in eine Tauchhülse des Gehäuses und dergleichen mehr vorsieht. Die erfindungsgemäße Lösung erlaubt es, beliebige Behälter parallel in individuellen ebenso wie in gleichen Prozessen nebeneinander energiesparend und umweltverträglich zu führen.

Mit einigem Vorteil kann vorgesehen sein, dass der Isolierkammer wenigstens ein thermisch isolierender, stützender Formkörper zugeordnet ist. Ein solcher Formkörper wird bei der Herstellung des Behälters in die äußere Wand des Gehäuses eingelegt und dann von der inneren Wand abgedeckt. Trotzdem anschließend ein Vakuum in dem doppelwandigen Gehäuse erzeugt wird, kann das Gehäuse hierdurch beliebige Formen annehmen, ohne dass eine Verformung befürchtet werden muss.

Konkret kann der Formkörper hierfür aus einem Hartschaum, vorzugsweise aus expandiertem oder extrudiertem Polystyrol, Polyvinylchlorid oder Polyurethan, oder aus einem mineralischen Faserstoff oder aus einem anorganischen Faserstoff hergestellt sein. Im Wesentlichen muss es sich lediglich um einen starren und vorzugsweise leichten Formkörper handeln, welcher nichtleitend ist, um eine Kältebrücke durch das um ihn herum anschließend erzeugte Vakuum zu vermeiden.

Hierdurch wird es ermöglicht, dass auch gerade Flächen nicht in Richtung des Vakuums aufgrund von dessen Druck verbogen werden, sondern neben zylindrischen auch Formen des Gehäusemantels in mehrkantigen, insbesondere vierkantigen Gestaltungen möglich sind.

Bevorzugtermaßen kann die Isolierkammer von außerhalb des Gehäuses über ein Vakuumventil zugänglich sein. Dies ermöglicht es, die Isolierkammer von Zeit zu zeit neu zu evakuieren, um sicherzustellen, dass die Isolierfunktion optimal gewährleistet bleibt.

In konkreter Ausgestaltung kann vorgesehen sein, dass der Arbeitskammer ein Innenbehälter zugeordnet ist. Ein solcher Innenbehälter kann vielerlei Funktionen erfüllen. Zunächst erlaubt er es, im Falle von austretenden Produktbestandteilen entnommen und gereinigt oder bedarfsweise ersetzt zu werden. Hierzu kann der Innenbehälter in die Arbeitskammer lose eingesetzt und dadurch unproblematisch durch die Zugangsöffnung entnehmbar sein. Gerade in der beispielhaft angesprochenen Batterieherstellung wird mit ätzenden Stoffen gearbeitet, bei denen im Fall eines Austritts dafür gesorgt werden muss, dass eine rückstandslose Entfernung möglich ist, so dass eventuelle Dämpfe durch das Personal nicht eingeatmet werden können. Im Rahmen der hier beschriebenen Prozesse treten diese Stoffe zunächst einmal ohnehin nur in den Behälter bzw. Innenbehälter aus und können dann auch unproblematisch entfernt werden ohne mit der Raumatmosphäre in Kontakt zu treten.

In diesem Zusammenhang kann es sinnvoll sein, wenn der Innenbehälter aus einem säurebeständigen Material, vorzugsweise aus Edelstahl, hergestellt ist. Ein solches Material kann so gewählt sein, dass es von den austretenden Stoffen nicht angegriffen wird. Eine Anpassung der Materialauswahl kann je nach Anwendungsfall erfolgen.

Dabei kann es sinnvoll sein, wenn der Innenbehälter eine mehrkantige Stützkontur aufweist, welche mehrere Kontaktkanten zur Stützung des Werkstücks in der Arbeitskammer ausbildet. Auf diese Weise werden flächige Kontakte zwischen dem Werkstück und dem Innenbehälter vermieden und das Werkstück kann auch dann leicht aus dem Innenbehälter herausgelöst werden, wenn Material beim Einfüllvorgang oder während einer Reaktion ausgetreten ist.

Gegen das Entweichen von Dämpfen aus dem Arbeitsraum hilft der Verschluss des Behälters, welcher vorzugsweise als Einschubelement oder als Blende, insbesondere als Irisblende, ausgebildet sein kann. Ein solcher Verschluss kann auch dann geöffnet und verschlossen werden, wenn der Behälter über einen Anschlussflansch mit einer Zuführeinrichtung verbunden ist. Mithilfe eines geeigneten Betätigungselements, etwa als Griffplatte, Schieber oder Drehbetätigungselement kann eine manuelle und/oder maschinelle Betätigung des Verschlusses ermöglicht werden. So kann beispielsweise der Verschluss als Schiebeelement ausgebildet sein, welches wie ein Schiebedeckel von seitlich über die Zugangsöffnung geschoben wird. Eine Blende kann über einen Schieber mechanisch betätigt werden, ebenso kann dies über eine Schraube erfolgen. Dies lässt sich durch einen Betätigungsautomaten mit einem rotatorischen Betätigungsantrieb, welcher bedarfsweise in das Drehbetätigungselement eingreift, besonders leicht umsetzen.

Mit einigem Vorteil kann dem Behälter an der Zugangsöffnung ein Anschlussflansch zur form- und kraftschlüssigen Verbindung mit einer Zuführeinrichtung zugeordnet sein. Dies erlaubt es, die Zuführeinrichtung als mechanisch verschlossenen Trichter auszugestalten, welcher durch den Anschlussflansch dicht und sauber mit dem Behälter verbunden werden kann. Ein Verschütten von Material kann dadurch weitgehend ausgeschlossen werden.

Weiter kann der Anschlussflansch mit dem Verschluss eine Kavität ausbilden, welche mit einem Gegenverbinder der Zuführeinrichtung zu einer Entlastungskammer ergänzbar ist. In dem Fall, dass in dem Behälter ein Über- oder Unterdruck vorgesehen wird, kann das Öffnen des Verschlusses erschwert sein. Durch die Bildung einer Entlastungskammer steht die Möglichkeit zur Verfügung, eine Druckentlastung um den Verschluss herum zu bewirken und den Verschluss verschleißfrei zu öffnen. Hierzu kann es sinnvoll sein, wenn dem Gehäuse zur Beeinflussung des Innendrucks der Arbeitskammer und/oder der Kavität ein Druckventil zur Angleichung an einen Umgebungsdruck und/oder ein mit einem Gasspeicher verbindbares Gasventil, insbesondere zur Kühlung mit einem Kühlgas, zugeordnet ist. Letzten Endes kann der Druckausgleich mit jeder Form von Gas durchgeführt werden, allerdings kann es sinnvoll sein, wenn das Ventil mit verschiedenen Prozessgasen beaufschlagt werden kann, sei es zur Druckerhöhung, zur Kühlung oder als Schutzgas zur Vermeidung von Reaktionen.

Mit einigem Vorteil kann dem Gehäuse ferner ein Druckmessgerät und/oder eine Tauchhülse für einen Temperatursensor zugeordnet sein. Auch ist es möglich, dem Gehäuse die Sensoren direkt zuzuordnen und eine Schnittstelle, etwa eine kontaktlose Schnittstelle zum Auslesen der Messdaten zuzuordnen.

Für die Heizung des Behälters sind verschiedene Lösungen einsetzbar. Besonders bevorzugt ist jedoch, wenn das Heizelement als induktiv kontaktlos beheizbarer Eisenkern ausgebildet ist. Ein solcher Eisenkern kann in der Wandung des Behälters, unmittelbar benachbart zur Wandung der Arbeitskammer bzw. des Innenbehälters angeordnet sein, so dass eine Wärmeabgabe zwar in die Arbeitskammer hinein, nicht aber aus dem Behälter heraus erfolgen kann. Insoweit ist vorgesehen, den Eisenkern in jedem Fall innerhalb der Isolierkammer anzuordnen. Weiter muss die Isolierkammer aus einem Material bestehen, welches nicht induktiv anregbar ist, so dass eine um den Behälter angelegte Induktionsspule sich nur auf den Eisenkern, nicht aber auf eine andere Materialschicht des Behälters auswirkt. Um darüber hinaus Korrosionen des Heizelements zu vermeiden, kann dieses in einer nichtleitenden Umhüllung korrosionsgeschützt gekapselt sein.

Ebenfalls vorgesehen ist ein Verfahren zur Behandlung eines Werkstücks in einem vorstehend beschriebenen Behälter. Ein solches Verfahren ist erfindungsgemäß dadurch gekennzeichnet, dass das Werkstück, bedarfsweise zusammen mit weiteren Stoffen, durch die Zugangsöffnung in die Arbeitskammer eingebracht wird, die Zugangsöffnung mithilfe des Verschlusses hermetisch abgedichtet wird und dem Gehäuse vorübergehend eine Induktionsspule zugeordnet wird, mit deren Hilfe die Arbeitskammer mit dem darin aufgenommenen Werkstück entlang eines von einer Prozesssteuerung vorgegebenen Temperaturverlaufs beheizt wird. Dies bildet, wie bereits beschrieben weitgehend beliebige Prozesse ab, indem die Prozesse lokal in den Behältern ablaufen und auf Wärmetunnel mit eigenen Atmosphären verzichtet werden kann.

Konkret kann die Prozesssteuerung eine Kühlung des Arbeitsraums mit dem darin aufgenommenen Werkstück mithilfe eines gasförmigen Kühlmittels oder durch Wärmeabgabe an einen Wärmetauscher vornehmen. In diesem Zusammenhang ist es sinnvoll, wenn sich diese Vornahme an einem vorgegebenen Prozessablauf orientiert, wozu die Prozesssteuerung einen tatsächlichen Temperaturverlauf durch Einführen eines Temperatursensors in eine Tauchhülse des Gehäuses und Messung der jeweils aktuellen Temperatur prüft und vorzugsweise im Rahmen einer Regelung dem vorgegebenen Temperaturverlauf nachführt. Das Durchlaufen durch den Wärmetunnel kann hierdurch aufgrund eines zeitlichen Verlaufs der Temperaturänderung nachgebildet werden. Auch eine Druckerhöhung oder Drucksenkung durch eine Druckerhöhung oder Drucksenkung an einem dem Gehäuse zugeordneten Gasventil kann vonseiten der Prozesssteuerung in diesem Zusammenhang vorgenommen werden.

Die vorstehend beschriebene Erfindung wird im Folgenden anhand eines Ausführungsbeispiels näher erläutert.

Es zeigen
- Figur 1: einen erfindungsgemäßen Behälter in einer perspektivischen Darstellung von schräg oben,
- Figur 2: den Behälter gemäß Figur 1 in einer Seitenansicht,
- Figur 3: einen ersten in Figur 2 gezeigten Schnitt durch den Behälter,
- Figur 4: einen zweiten in Figur 2 gezeigten Schnitt durch den Behälter,
- Figur 5: den Behälter gemäß Figur 1 mit einer Induktionsspule im Zusammenhang mit einer Zuführeinrichtung in einer Seitenansicht, sowie
- Figur 6: den erfindungsgemäßen Behälter in einer Schnittdarstellung parallel zu der Seitenansicht der Figur 5.

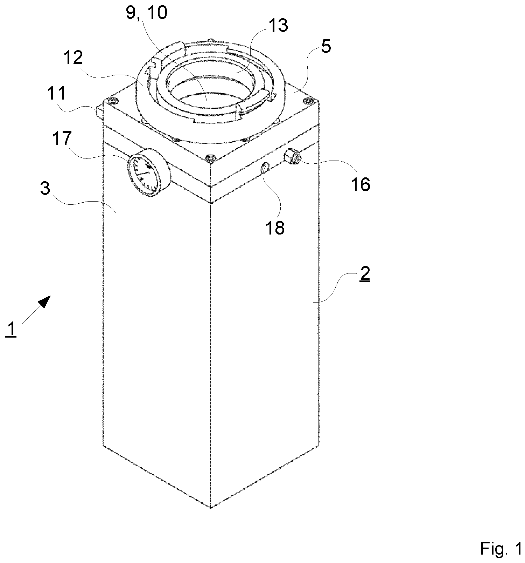

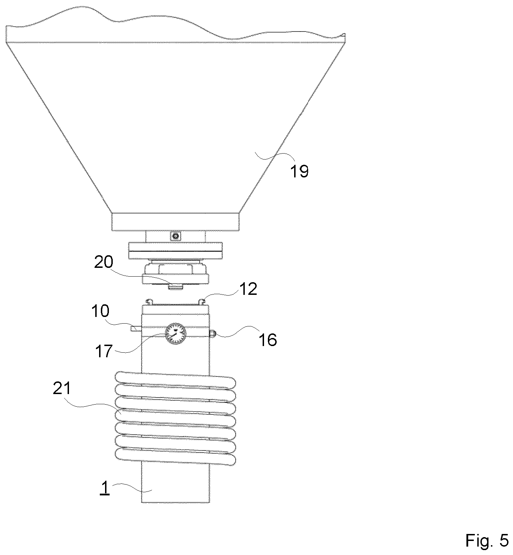

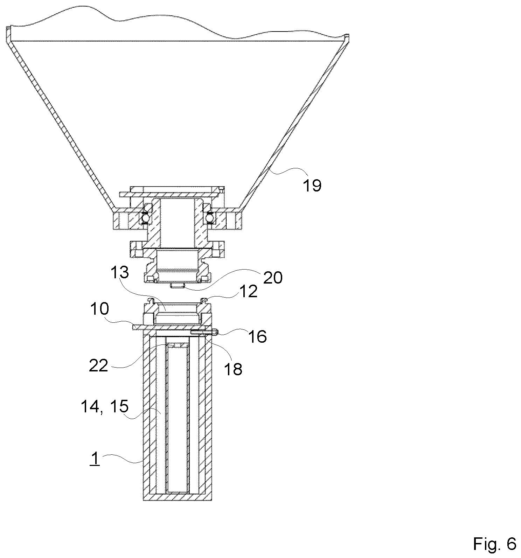

Figur 1 zeigt einen Behälter 1 zur Behandlung von Werkstücken 22, die in dem Behälter 1 aufgenommen werden. Der Einsatz eines solchen Behälters 1 soll vorliegend lediglich beispielhaft an einer Batterieherstellung verdeutlicht werden. Zunächst ist festzustellen, dass der Behälter 1 als quaderförmiger Behälter 1 mit rechteckigen Seitenflächen gebildet ist, wobei die Seitenflächen gemeinsam einen Gehäusemantel 3 ausbilden. Die Form des Behälters 1 ist besonders vorteilhaft, um im Prozess gegriffen und gelagert zu werden, sei es bei einer stehenden oder liegenden Lagerung. Zudem kann in einem solchen Körper eine Lagerung des Werkstücks 22 leicht derart vorgesehen werden, dass dieses kontaktarm in einem Innenbehälter 14 gelagert wird, der aber seinerseits flächig an einer Wandung oder einem Eisenkern 8 des Behälters 1 anliegt. Der Gehäusemantel 3 ist als doppelwandige Isolierkammer 7 gebildet, welche eine Arbeitskammer 6 umschließt, in welcher das Werkstück 22 aufgenommen wird. Oberseitig ist das Gehäuse 2 des Behälters 1 von einem Gehäusedeckel 5 abgeschlossen, in welchem eine Zugangsöffnung 9 eingebracht ist, durch welche hindurch das Werkstück 22 in den Behälter 1 verbracht werden kann. In dem Behälter 1 kann das Werkstück 22 unterschiedlichen Temperaturen und Drücken ausgesetzt und mit Schutzgas beaufschlagt werden, so dass der Durchlauf verschiedener Prozessschritte, die ansonsten üblicherweise in einem Wärmetunnel hintereinander ablaufen würden, abgebildet werden kann. Hierzu ist der Behälter 1 zunächst mithilfe eines Verschlusses 10 hermetisch abschließbar und kann zur Befüllung über einen Anschlussflansch 13 mit einer Zuführeinrichtung 19 verbunden werden, wie dies in den Figuren 5 und 6 dargestellt ist. Im Inneren des Anschlussflanschs 12, jedoch außerhalb des Arbeitsraums 6, welcher nach oben durch den Verschluss 10 begrenzt wird, ist eine Kavität 13 gebildet, in welche bei Bedarf ein Gas eingeleitet werden kann, um die Druckverhältnisse beiderseits des Verschlusses 10, jedoch ebenso beiderseits eines Verschlusselements an der Zuführeinrichtung 19, anzugleichen und die Öffnung zu ermöglichen.

Mithilfe einer Griffplatte 11 kann der Behälter zum Einen maschinell gegriffen und transportiert werden, zum Anderen ist es möglich, dadurch den Verschluss 10 maschinell zu öffnen. Ein Druckmessgerät 17 ermöglicht die Erfassung eines Innendrucks des Behälters, wobei dieser Messwert bedarfsweise auch permanent durch einen Drucksensor erfasst und an eine Prozesssteuerung übertragen werden kann. Entsprechendes gilt für eine Tauchhülse 18, welche zum Einführen einer Temperatursonde dient. Über ein Gasventil 16 kann das benötigte Gas zum Druckausgleich in der Kavität 13 oder im Arbeitsraum 6 bereitgestellt werden oder ein Kühlgas in den Arbeitsraum geleitet werden. Ein Ausgleich der Temperatur über einen Wärmetauscher ist ebenfalls möglich.

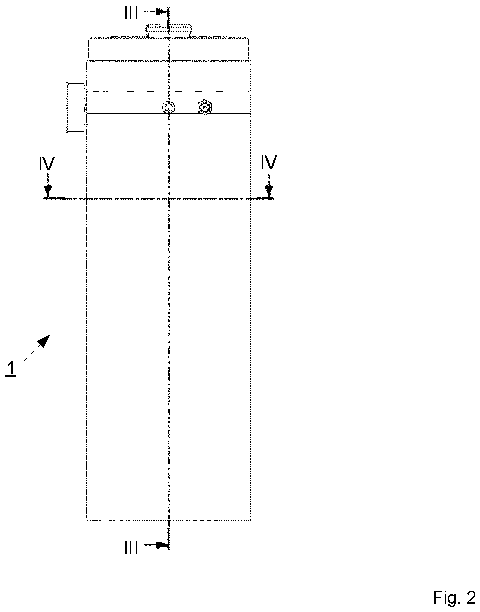

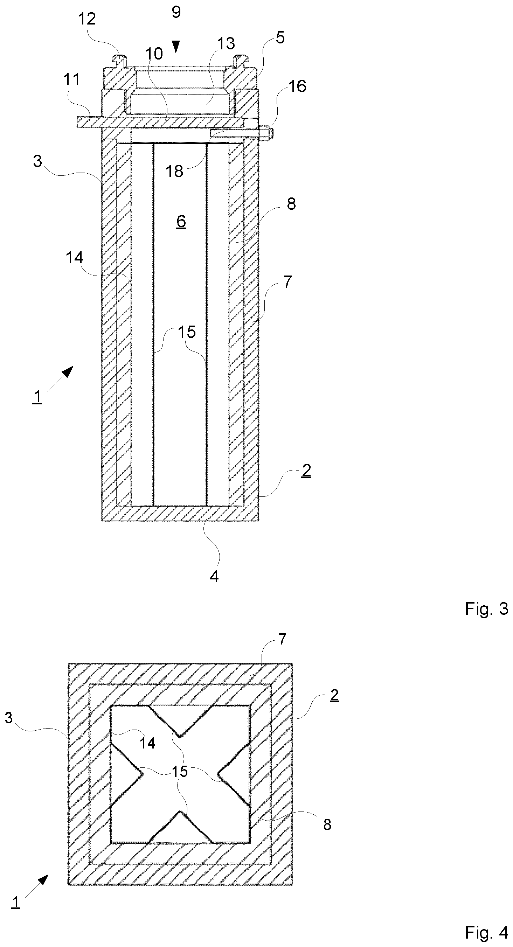

Figur 2 zeigt die Ebenen, in denen die Schnittdarstellungen der Figuren 3 und 4 in dem Behälter 1 gelegen sind.

Figur 3 zeigt einen Längsschnitt des Behälters 1, in dem der Schichtaufbau des Behälters 1 erkennbar ist. Außen findet sich zunächst der Gehäusemantel 3 und der Gehäuseboden 4, welche wie der Gehäusedeckel 5 aus einer doppelwandigen Konstruktion bestehen. Diese ist mit einem Formkörper aus Hartschaum gefüllt und bildet mit dem Formkörper eine Isolierkammer 7. Diese Konstruktion erlaubt es, beliebige Formen herzustellen und zu evakuieren, ohne dass eine Einbauchung aufgrund der Druckkräfte des Vakuums auftreten würde. Der vorgefertigte Formkörper wird bei der Herstellung des Behälters in die Außenwand eingelegt und von der Innenwand abgedeckt, so dass eine Kapsel entsteht, die aufgrund der Form des Formkörpers nicht eingedrückt werden kann.

Im Inneren der Arbeitskammer 6 ist ein Innenbehälter 14 aufgenommen, welcher aus dem Behälter 1 bei Bedarf entnommen werden kann. Hierzu muss lediglich der Gehäusedeckel 5 von dem Gehäusemantel 3 abgeschraubt werden, so dass der Innenbehälter 14 zugänglich wird. Der Innenbehälter 14 weist eine Stützstruktur 15 auf, welche insbesondere in der Figur 4 gut zu erkennen ist. Die Stützstruktur 15 bildet vier nach innen gerichtete Zacken aus, welche schmale Kontaktkanten zu einem einzulegenden Werkstück 22 bilden, wie in Figur 6 gezeigt. Soweit bei der Befüllung oder aufgrund einer Reaktion im Werkstück 22 Material austritt, wird aufgrund des Innenbehälters sichergestellt, dass kein vollflächiger Kontakt eintritt, der das Entnehmen des Werkstücks erschweren könnte.

Figur 5 zeigt, wie der Behälter 1 mit einer Zuführeinrichtung 19 verbunden werden kann. Im Rahmen eines Herstellungsprozesses wird eine hier nicht näher dargestellte Prozesssteuerung den Behälter 1 zu verschiedenen Stationen befördern lassen, wobei vorliegend eine Induktionsspule 21 dem Behälter 1 vorläufig zugeordnet ist. Mithilfe der Induktionsspule 21 kann ein bestimmter Temperaturverlauf in der Arbeitskammer 6 des Behälters 1 nachgefahren werden, wobei im Bedarfsfall auch eine aktive Kühlung durch die Einleitung von Kühlgas durch das Gasventil 16 bewirkt werden kann.

Initial ist der Behälter 1 mit einer Hülse als Werkstück 22 befüllt, welches in Figur 6 dargestellt ist und wird unter einer Zuführeinrichtung 19 mit einem Einfülltrichter positioniert. Es erfolgt eine Ankopplung des Behälters 1 mithilfe des Anschlussflanschs 12, welcher kraft- und formschlüssig mit einem Gegenverbinder 20 der Zuführeinrichtung 19 zusammenwirkt. Die Kavität 13 zwischen dem Gegenverbinder 20 und dem Verschluss 10 wird mit der gewünschten Atmosphäre befüllt, wobei es sich um Schutzgas handeln kann. Anschließend wird der Druck im Behälter 1 abgebaut, so dass der Verschluss 10 durch Herausziehen des Schiebeelements an der Griffplatte 11 geöffnet werden kann. Hierbei wird die zunächst in der Kavität 13 anliegende Atmosphäre nun auch in der Arbeitskammer 6 des Behälters 1 hergestellt.

Durch Öffnen eines Verschlusses seitens der Zuführeinrichtung 19 wird nun ein Füllmaterial, etwa ein Granulat, eine Flüssigkeit wie beispielsweise eine Elektrolytlösung oder ein Gas, in den Behälter 1 oder in ein Werkstück 22 in dem Behälter 1 eingefüllt. Nun wird der für den nächsten Prozessschritt gewünschte Über- oder Unterdruck in dem Behälter 1 eingestellt und der Verschluss 10 wieder geschlossen. Vorher, währenddessen und/oder danach wird die Temperatur über die Induktionsspule 21, welche den Eisenkern 8 im Inneren des Behälters 1 beheizt, angepasst und währenddessen über einen in die Tauchhülse 18 des Gehäuses 2 kontrolliert. Bei Erreichen der gewünschten Temperatur wird der Temperaturfühler aus der Tauchhülse 18 herausbewegt und die Induktionsspule 21 entfernt. Der Verschluss an der Zuführeinrichtung 19 wird ebenfalls verriegelt und der Behälter 1 mit seinem Anschlussflansch 12 von dem Gegenverbinder 20 der Zuführeinrichtung 19 getrennt. Schließlich wird der Behälter 1 zu dem nächsten Prozessschritt transportiert.

Vorstehend beschrieben ist somit eine Möglichkeit, mithilfe eines abgeschlossenen Behälters bekannte Durchlaufprozesse von dem Wärmetunnel auf eine produktindividuelle Fertigung zu verlagern und damit den Energieeinsatz zu minimieren, die Umgebungsparameter besser anpassen zu können und die Umgebung für das Personal weniger gesundheitsschädlich zu gestalten.

### BEZUGSZEICHENLISTE

- 1: Behälter
- 2: Gehäuse
- 3: Gehäusemantel
- 4: Gehäuseboden
- 5: Gehäusedeckel
- 6: Arbeitskammer
- 7: Isolierkammer
- 8: Eisenkern
- 9: Zugangsöffnung
- 10: Verschluss
- 11: Griffplatte
- 12: Anschlussflansch
- 13: Kavität
- 14: Innenbehälter
- 15: Stützkontur
- 16: Gasventil
- 17: Druckmessgerät
- 18: Tauchhülse
- 19: Zuführeinrichtung
- 20: Gegenverbinder
- 21: Induktionsspule
- 22: Werkstück

## Patentansprüche

1. Behälter zur Behandlung eines Werkstücks (22), umfassend ein Gehäuse (2), in welchem ein Gehäusemantel (3), ein Gehäuseboden (4) und ein Gehäusedeckel (5) eine Arbeitskammer (6) umschließen, wobei das Gehäuse (2) über eine Zugangsöffnung (9) im Gehäusedeckel (5) zugänglich und doppelwandig ausgeführt ist und in einem innenliegenden Zwischenraum der Doppelwandung eine evakuierte Isolierkammer (7) ausbildet,
**dadurch gekennzeichnet, dass** die Zugangsöffnung (9) einen Verschluss (10) zur hermetischen Abdichtung der Arbeitskammer (6) aufweist und die Arbeitskammer (6) von einem Heizelement umgeben ist, welches sich zumindest abschnittsweise entlang des Gehäusemantels (3) erstreckt.

2. Behälter gemäß Anspruch 1, **dadurch gekennzeichnet, dass** der Isolierkammer (7) wenigstens ein thermisch isolierender, stützender Formkörper zugeordnet ist.

3. Behälter gemäß Anspruch 2, **dadurch gekennzeichnet, dass** der Formkörper aus einem Hartschaum, vorzugsweise aus expandiertem oder extrudiertem Polystyrol, Polyvinylchlorid oder Polyurethan, oder aus einem mineralischen Faserstoff oder aus einem anorganischen Faserstoff hergestellt ist.

4. Behälter gemäß einem der Ansprüche 2 oder 3, **dadurch gekennzeichnet, dass** der Gehäusemantel (3) zylindrisch oder mehrkantig, vorzugsweise vierkantig, gebildet ist.

5. Behälter gemäß einem der vorhergehenden Ansprüche, **dadurch gekennzeichnet, dass** die Isolierkammer (7) von außerhalb des Gehäuses (2) über ein Vakuumventil zugänglich ist.

6. Behälter gemäß einem der vorhergehenden Ansprüche, **dadurch gekennzeichnet, dass** der Arbeitskammer (6) ein Innenbehälter (14) zugeordnet ist.

7. Behälter gemäß Anspruch 6, **dadurch gekennzeichnet, dass** der Innenbehälter (14) aus einem säurebeständigen Material, vorzugsweise aus Edelstahl, hergestellt ist.

8. Behälter gemäß einem der Ansprüche 6 oder 7, **dadurch gekennzeichnet, dass** der Innenbehälter (14) eine mehrkantige Stützkontur (15) aufweist, welche mehrere Kontaktkanten zur Stützung des Werkstücks (22) in der Arbeitskammer (6) ausbildet.

9. Behälter gemäß einem der Ansprüche 6 bis 8, **dadurch gekennzeichnet, dass** der Innenbehälter (14) in die Arbeitskammer (6) lose eingesetzt und entnehmbar ist.

10. Behälter gemäß einem der vorhergehenden Ansprüche, **dadurch gekennzeichnet, dass** der Verschluss (10) als Einschubelement oder als Blende, insbesondere als Irisblende, ausgebildet ist.

11. Behälter gemäß einem der vorhergehenden Ansprüche, **dadurch gekennzeichnet, dass** dem Verschluss (10) wenigstens ein Betätigungselement für eine manuelle und/oder maschinelle Betätigung zugeordnet ist.

12. Behälter gemäß Anspruch 11, **dadurch gekennzeichnet, dass** das Betätigungselement als Griffplatte (11), Schieber oder Drehbetätigungselement ausgebildet ist.

13. Behälter gemäß einem der vorhergehenden Ansprüche, **dadurch gekennzeichnet, dass** der Zugangsöffnung (9) ein Anschlussflansch (12) zur form- und kraftschlüssigen Verbindung mit einer Zuführeinrichtung (19) zugeordnet ist.

14. Behälter gemäß Anspruch 13, **dadurch gekennzeichnet, dass** der Anschlussflansch (12) mit dem Verschluss eine Kavität ausbildet, welche mit einem Gegenverbinder (20) der Zuführeinrichtung (19) zu einer Entlastungskammer ergänzbar ist.

15. Behälter gemäß einem der vorhergehenden Ansprüche, **dadurch gekennzeichnet, dass** dem Gehäuse (2) zur Beeinflussung des Innendrucks der Arbeitskammer (6) und/oder der Kavität ein Druckventil zur Angleichung an einen Umgebungsdruck und/oder ein mit einem Gasspeicher verbindbares Gasventil (16) zugeordnet ist.

16. Behälter gemäß einem der vorhergehenden Ansprüche, **dadurch gekennzeichnet, dass** dem Gehäuse (2) ein Druckmessgerät (17) und/oder eine Tauchhülse (18) für einen Temperatursensor zugeordnet ist.

17. Behälter gemäß einem der vorhergehenden Ansprüche, **dadurch gekennzeichnet, dass** das Heizelement als induktiv kontaktlos beheizbarer Eisenkern (8) ausgebildet ist.

18. Behälter gemäß einem der vorhergehenden Ansprüche, **dadurch gekennzeichnet, dass** das Heizelement in einer nichtleitenden Umhüllung korrosionsgeschützt gekapselt ist.

19. Verfahren zur Behandlung eines Werkstücks (22) in einem Behälter (1) gemäß einem der vorhergehenden Ansprüche,
**dadurch gekennzeichnet, dass** das Werkstück (22), bedarfsweise zusammen mit weiteren Stoffen, durch die Zugangsöffnung (9) in die Arbeitskammer (6) eingebracht wird, die Zugangsöffnung (9) mithilfe des Verschlusses (10) hermetisch abgedichtet wird und dem Gehäuse (2) vorübergehend eine Induktionsspule (21) zugeordnet wird, mit deren Hilfe die Arbeitskammer (6) mit dem darin aufgenommenen Werkstück (22) entlang eines von einer Prozesssteuerung vorgegebenen Temperaturverlaufs beheizt wird.

20. Verfahren gemäß Anspruch 19, **dadurch gekennzeichnet, dass** die Prozesssteuerung eine Kühlung des Arbeitsraums (6) mit dem darin aufgenommenen Werkstück (22) mithilfe eines gasförmigen Kühlmittels oder durch Wärmeabgabe an einen Wärmetauscher vornimmt.

21. Verfahren gemäß einem der Ansprüche 19 oder 20, **dadurch gekennzeichnet, dass** die Prozesssteuerung einen tatsächlichen Temperaturverlauf durch Einführen eines Temperatursensors in eine Tauchhülse (18) des Gehäuses (2) und Messung der jeweils aktuellen Temperatur prüft und vorzugsweise im Rahmen einer Regelung dem vorgegebenen Temperaturverlauf nachführt.

22. Verfahren gemäß einem der Ansprüche 19 bis 21, **dadurch gekennzeichnet, dass** eine Druckerhöhung oder Drucksenkung durch eine Druckerhöhung oder Drucksenkung an einem dem Gehäuse zugeordneten Gasventil vornimmt.

## Claims

1. Container for handling a workpiece (22), comprising a housing (2) in which a housing jacket (3), a housing base (4) and a housing cover (5) enclose a working chamber (6),
wherein the housing (2) via an access opening (9) in the housing cover (5) is accessible and double-walled and is installed in an internal space between the double walls forms an evacuated insulating chamber (7),
**characterized in that**
the access opening (9) has a closure (10) for hermetically sealing the working chamber (6) and the working chamber (6) is surrounded by a heating element,
which extends at least in sections along the housing jacket (3).

2. Container according to claim 1, **characterized in that**
the insulating chamber (7) is associated with at least one thermally insulating, molded body.

3. Container according to claim 2, **characterized in that**
the molded body made from a rigid foam, preferably made from expanded or extruded polystyrene, polyvinyl chloride or polyurethane, or made from a mineral fibrous material or from an inorganic fibrous material.

4. Container according to one of claims 2 or 3, **characterized in that**
that the housing jacket (3) is formed cylindrical or polygonal, preferably square.

5. Container according to one of the preceding claims, **characterized in that**
the insulating chamber (7) is accessible from outside the housing (2) via a vacuum valve.

6. Container according to one of the preceding claims, **characterized in that** the working chamber (6) is associated with an inner container (14).

7. Container according to claim 6, **characterized in that**
the inner container (14) is made of an acid-resistant material, preferably of stainless steel.

8. Container according to one of claims 6 or 7, **characterized in that**
**in that** the inner container (14) exhibits a polygonal support contour (15) which forms a plurality of contact edges for supporting the workpiece (22) in the working chamber (6).

9. Container according to one of claims 6 to 8, **characterized in that**
the inner container (14) is loosely inserted into the working chamber (6) and can be removed.

10. Container according to one of the preceding claims, **characterized in that**
that the closure (10) is used as a slide-in element or as a diaphragm, in particular as an iris diaphragm.

11. Container according to one of the preceding claims, **characterized in that**
that at least one actuating element for manual and/or mechanical actuation is assigned to the closure (10).

12. Container according to claim 11, **characterized in that**
the actuating element is designed as a handle plate (11), slider or rotary actuating element.

13. Container according to one of the preceding claims, **characterized in that**
that the access opening (9) is assigned a connecting flange (12) for positive and non-positive connection to a feed device (19).

14. Container according to claim 13, **characterized in that**
the connecting flange (12) forms a cavity with the closure, which can be supplemented with a mating connector (20) of the feed device (19) to form a relief chamber.

15. Container according to one of the preceding claims, **characterized in that**
**in that** a pressure valve for adjusting to an ambient pressure and/or a gas valve (16) which can be connected to a gas reservoir is assigned to the housing (2) for influencing the internal pressure of the working chamber (6) and/or the cavity.

16. Container according to one of the preceding claims, **characterized in that**
that a pressure measuring device (17) and/or a thermowell (18) for a temperature sensor is assigned to the housing (2).

17. Container according to one of the preceding claims, **characterized in that**
that the heating element is designed as an inductively contactless heatable iron core (8).

18. Container according to one of the preceding claims, **characterized in that**
the heating element is encapsulated in a non-conductive sheath to protect it from corrosion.

19. Process for treating a workpiece (22) in a container (1) according to one of the preceding claims, characterized that
the workpiece (22), as needed together with further substances, is introduced into the working chamber (6) through the access opening (9), the access opening (9) is closed with the aid of the closure (10) is hermetically sealed and an induction coil (21) is temporarily assigned to the housing (2), with the aid of which the working chamber (6) with the workpiece (22) accommodated therein is heated along a temperature curve specified by a process control system.

20. Process according to claim 19, **characterized in that**
the process control cools the working chamber (6) with the workpiece (22) accommodated therein with the aid of a gaseous coolant or by transferring heat to a heat exchanger.

21. Process according to one of claims 19 or 20, **characterized in that**
that the process control checks an actual temperature curve by importing a temperature sensor into a thermowell (18) of the housing (2) and measuring the current temperature in each case and preferably follows the predetermined temperature curve as part of a control system.

22. Process according to one of claims 19 to 21, **characterized in that**
increase or reduction of pressure is carried out by increase or reduction of pressure at a gas valve associated with the housing.

## Revendications

1. Récipient pour le traitement d'une pièce à usiner (22), comprenant un boîtier (2), dans lequel une enveloppe de boîtier (3), un fond de boîtier (4) et un couvercle de boîtier (5) entourent une chambre de travail (6), le boîtier (2) étant accessible par une ouverture d'accès (9) dans le couvercle de boîtier (5), étant réalisé à double paroi et formant, dans un espace intermédiaire intérieur de la double paroi, une chambre d'isolation (7) sous vide,
**caractérisé en ce que** l'ouverture d'accès (9) présente un obturateur (10) pour le scellement hermétique de la chambre de travail (6) et la chambre de travail (6) est entourée par un élément chauffant qui s'étend au moins par sections le long de l'enveloppe de boîtier (3).

2. Récipient selon la revendication 1, **caractérisé en ce qu'**au moins un corps de support moulé, thermiquement isolant, est associé à la chambre d'isolation (7).

3. Récipient selon la revendication 2, **caractérisé en ce que** le corps moulé est fabriqué en mousse rigide, de préférence en polystyrène expansé ou extrudé, en chlorure de polyvinyle ou en polyuréthane, ou en une matière fibreuse minérale ou en une matière fibreuse inorganique.

4. Récipient selon l'une des revendications 2 ou 3, **caractérisé en ce que** l'enveloppe du boîtier (3) est de forme cylindrique ou polygonale, de préférence quadrangulaire.

5. Récipient selon l'une des revendications précédentes, **caractérisé en ce que** la chambre d'isolation (7) est accessible depuis l'extérieur du boîtier (2) par une vanne à vide.

6. Récipient selon l'une des revendications précédentes, **caractérisé en ce qu'**un récipient intérieur (14) est associé à la chambre de travail (6).

7. Récipient selon la revendication 6, **caractérisé en ce que** le récipient intérieur (14) est réalisé en un matériau résistant aux acides, de préférence en acier inoxydable.

8. Récipient selon l'une des revendications 6 ou 7, **caractérisé en ce que** le récipient intérieur (14) présente un contour de support polygonal (15), formant plusieurs arêtes de contact pour supporter la pièce à usiner (22) dans la chambre de travail (6).

9. Récipient selon l'une des revendications 6 à 8, **caractérisé en ce que** le récipient intérieur (14) est inséré dans la chambre de travail (6) sans y être fixé, et peut être retiré.

10. Récipient selon l'une des revendications précédentes, **caractérisé en ce que** l'obturateur (10) est conçu comme un élément d'insertion ou un diaphragme, notamment un diaphragme à iris.

11. Récipient selon l'une des revendications précédentes, **caractérisé en ce que** l'obturateur (10) est associé à au moins un élément d'actionnement pour un actionnement manuel et/ou mécanique.

12. Récipient selon la revendication 11, **caractérisé en ce que** l'élément d'actionnement est conçu sous la forme d'une plaque de préhension (11), d'un curseur ou d'un élément d'actionnement rotatif.

13. Récipient selon l'une des revendications précédentes, **caractérisé en ce qu'**une bride de raccordement (12) pour une liaison par complémentarité de forme et de force avec un dispositif d'alimentation (19) est associée à l'ouverture d'accès (9).

14. Récipient selon la revendication 13, **caractérisé en ce que** la bride de raccordement (12) forme avec l'obturateur une cavité qui peut être complétée par un contre-connecteur (20) du dispositif d'alimentation (19) pour former une chambre de décharge.

15. Récipient selon l'une des revendications précédentes, **caractérisé en ce que**, pour agir sur la pression interne de la chambre de travail (6) et/ou de la cavité, le boîtier (2) est associé à une vanne de pression pour s'adapter à une pression ambiante et/ou à une vanne de gaz (16) pouvant être reliée à un réservoir de gaz.

16. Récipient selon l'une des revendications précédentes, **caractérisé en ce qu'**un manomètre (17) et/ou un fourreau d'immersion (18) pour un capteur de température est associé au boîtier (2).

17. Récipient selon l'une des revendications précédentes, **caractérisé en ce que** l'élément chauffant est conçu comme un noyau de fer (8) pouvant être chauffé par induction sans contact.

18. Récipient selon l'une des revendications précédentes, **caractérisé en ce que** l'élément chauffant est encapsulé dans une enveloppe non conductrice, protégée contre la corrosion.

19. Procédé de traitement d'une pièce à usiner (22) dans un récipient (1) selon l'une des revendications précédentes,
**caractérisé en ce que** la pièce à usiner (22) est introduite dans la chambre de travail (6) par l'ouverture d'accès (9), si nécessaire avec d'autres substances, l'ouverture d'accès (9) est fermée hermétiquement au moyen de l'obturateur (10) et une bobine d'induction (21) est associée temporairement au boîtier (2), à l'aide de laquelle la chambre de travail (6) avec la pièce à usiner (22) qui y est logée est chauffée le long d'une courbe de température prédéfinie par une commande de processus.

20. Procédé selon la revendication 19, **caractérisé en ce que** la commande de processus procède à un refroidissement de l'espace de travail (6) avec la pièce à usiner (22) qui y est logée, à l'aide d'un agent de refroidissement gazeux ou par transfert de chaleur à un échangeur de chaleur.

21. Procédé selon l'une des revendications 19 ou 20, **caractérisé en ce que** la commande de processus vérifie une courbe de température réelle en introduisant un capteur de température dans un fourreau d'immersion (18) du boîtier (2), en mesurant la température actuelle respective et en l'adaptant de préférence à la courbe de température prédéfinie dans le cadre d'une régulation.

22. Procédé selon l'une des revendications 19 à 21, **caractérisé en ce qu'**une augmentation ou une diminution de la pression est effectuée par une augmentation ou une diminution de la pression au niveau d'une vanne de gaz associée au boîtier.
